# EUROPEAN PATENT APPLICATION

(11) **EP 2 005 998 A2**
(43) Veröffentlichungstag der Anmeldung: **24.12.2008**
(21) Anmeldenummer: 06812903.0
(22) Anmeldetag: 29.08.2006
(51) Int. Cl.: A63B 69/00, A63B 71/00, H04B 7/04

(54) **FUNKKOMMUNIKATIONSSYSTEM FÜR EIN MANNSCHAFTSSPORTSPIEL**

(30) Priorität: 04.04.2006 RU 2006110834
(71) Anmelder: Matveev, Vladimir Anatolevich, Tver 170007 (RU)
(72) Erfinder: Matveev, Vladimir Anatolevich, Tver 170007 (RU)
(74) Vertreter: Jeck, Anton
(86) Internationale Anmeldenummer: PCT/RU2006/000451
(87) Internationale Veröffentlichungsnummer: WO 2007/114730

(57) **Zusammenfassung**

Die Erfindung bezieht sich auf ein Funkverbindungssystem für das sportliche Kommandospiel zwischen Trainer und Spielern. Trainer und Spieler erhalten **dadurch** während des Spiels und des Trainings eine dauernd herstellbare Verbindung, dass in den Helmen der Spieler Sende-Empfangseinrichtungen eingebaut sind, die über ziffernkodierte Funkverbindungen mit der Sende-Empfangseinrichtung des Trainers verbindbar sind.

## Beschreibung

Die Erfindung bezieht sich auf ein Funkverbindungssystem für das sportliche Kommandospiel zwischen Trainer und Spieler. Das Funkverbindungssystem ist als Ausrüstung der Spieler im Eishockey mit Scheibe, im Fußball mit Ball, dem Rugby und dem amerikanischen Fußball anwendbar.

Zurzeit gibt es zwischen dem Trainer und den Spielern, sowie zwischen den Spielern während des Spiels und des Trainings keine spezielle Verbindung. Die Verbindung geschieht nur mit Hilfe der Stimme oder von Gesten. Dies schafft große Unannehmlichkeiten für die Spieler, den Trainer sowie die Zuschauer, die das Spiel beobachten.

Es ist Aufgabe der Erfindung ein Funkverbindungssystem zu schaffen, das zwischen den Spielern und dem Trainer während des Trainings und des Spiels ein dauernd verwendbare Verbindung gewährleistet.

Die gestellte Aufgabe wird durch die Merkmale des Anspruches 1 gelöst.

Über diese Funkverbindungen kann der Trainer gezielt mit den Spielern eine Verbindung herstellen und seine Kommandos abgeben, wobei für den Spieler die Möglichkeit gegeben ist, sich mit dem Trainer zu verständigen.

Weitere zweckmäßige und vorteilhafte Maßnahmen der Erfindung gehen aus den Unteransprüchen hervor.

Ein Ausführungsbeispiel der Erfindung ist in den Zeichnungen schematisch dargestellt. Es zeigen:
- Fig. 1: das Ablaufprogramm eines Funkverbindungssystems für ein sportliches Kommandospiel,

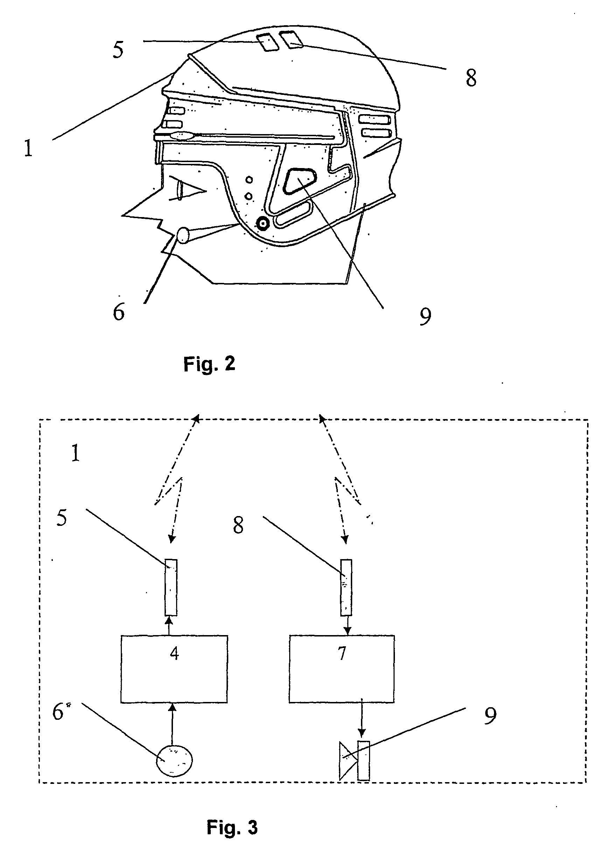

- Fig. 2: einen Eishockeyhelm mit einer Sende-Empfangseinrichtung und
- Fig. 3: das Blockschaltbild der Sende-Empfangseinrichtung im Helm nach Fig. 2.

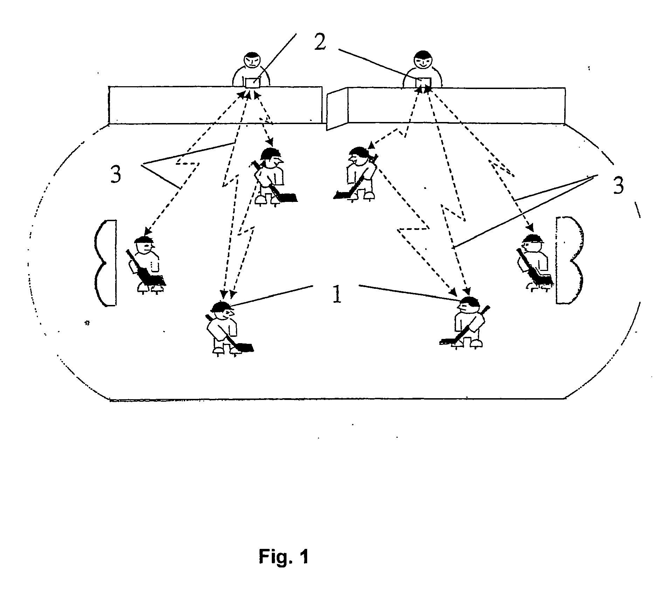

Das Funkverbindungssystem für das sportliche Kommandospiel nach Fig. 1 enthält Sende-Empfangseinrichtungen, die in den Helmen 1 der Spieler eingebaut sind, und Sende-Empfangseinrichtungen 2 für den Trainer, die über Funkverbindungen 3 miteinander verbindbar sind. Dabei enthalten die Sende-Empfangseinrichtungen der Spieler einen Radiosender 4 mit einer Sendeantenne 5 und einem Mikrofon 6 sowie einen Radioempfänger 7 mit einer Empfangsantenne 8 und einem Lautsprecher (Hörer) 9. Der Radiosender 4 und der Radioempfänger 7 sind auf entgegengesetzten Seiten dem Helm 1 der Spieler angeordnet und ihre Sende- und Empfangsantennen 5 und 8 sind in dem Helm 1 fest montiert. Dabei ist der Lautsprecher 9 des Radioempfängers 7 gegenüber einer Ohrmuschel des Spielers angeordnet und das Mikrofon 6 ist auf einem Halter in unmittelbarer Nähe des Mundes des Spielers befestigt. Die Sende-Empfangseinrichtung ist abnehmbar am Helm 1 befestigt und innerhalb des Helmes 1 zwischen demselben und einer dämpfenden Schicht angeordnet. Eine derartige Ausgestaltung der Sende-Empfangseinrichtung gewährleistet eine bequeme Benutzung für den Spieler und erlaubt die Einrichtung auf die geforderte Frequenz, eine einfache Reparatur und einen schnellen Ersatz. Die Funkverbindungen 3 sind im Zentimeterbereich der elektromagnetischen Wellen und werden durch Ziffernkodierung hergestellt. Die Sende-Empfangseinrichtung des Trainers ist als Funktelefon (Mobiltelefon) 2 ausgebildet.

Das Funkverbindungssystem für das sportliche Kommandospiel arbeitet auf folgende Weise:

Vor dem Beginn des Spiels oder der Aufnahme des Trainings nehmen die Spieler und der Trainer ihre Sende-Empfangseinrichtungen. Dabei wird zwischen ihnen eine Funkverbindung 3 über eine Funkstrecke aufgebaut, wobei die Anzahl durch ziffernkodierte Signale vorgenommen wird. Mit Hilfe des Funktelefons 2 gibt der Trainer akustische Kommandos, die in die kodierten Signale umgewandet und über die Funkstrecke 3 auf die Empfangsantenne 8 des ausgewählten Spielers gelangen. Die von der Empfangsantenne 8 im Helm 1 des Spielers aufgenommenen Signale werden von dem Radioempfänger 7 ausgewertet und am Lautsprecher 9 akustisch abgegeben. Diese akustischen Signale werden von den Ohren des Spielers wahrgenommen. Der Spieler informiert den Trainer über die Annahme des Kommandos mittels Sendung einer Sprachmitteilung ins Mikrofon 6. Im Mikrofon 6 werden die akustischen Wellen der Sprachmitteilung in elektrische Signale umgewandelt und auf den Eingang des Radiosenders 4 gegeben. Der Radiosender 4 wandelt das elektrische Signal in kodierte Signale um, die dann über die Sendeantenne 5 und die Funkstrecke 3 auf das Funktelefon 2 des Trainers gelangen. Das Funktelefon 2 nimmt die Impulse des Kodesignals auf und wandelt diese in ein akustisches Signal um, das der Trainer wahrnimmt. Die Funkverbindung läuft in ähnlicher Weise zwischen den einzelnen Spielern ab.

## Patentansprüche

1. Funkverbindungssystem für das sportliche Kommandospiel zwischen Trainer und Spielern,
**dadurch gekennzeichnet,**
**dass** in den Helmen (1) der Spieler Sende-Empfangseinrichtungen eingebaut sind, die über ziffernkodierte Funkverbindungen (3) mit der Sende-Empfangseinrichtung (2) des Trainers verbindbar sind.

2. Funkverbindungssystem nach Anspruch 1,
**dadurch gekennzeichnet,**
**dass** die Sende-Empfangseinrichtung des Spielers einen Radiosender (4) mit Sendeantenne (5) und ein Mikrofon (6) sowie einen Radioempfänger (7) mit Empfangsantenne (8) und einen Lautsprecher (9) aufweist.

3. Funkverbindungssystem nach Anspruch 2,
**dadurch gekennzeichnet,**
**dass** der Radiosender (4) und der Radioempfänger (7) auf entgegengesetzten Seiten des Helmes (1) angeordnet sind und
**dass** die Sendeantenne (5) und die Empfangsantenne (8) in Teilen des Helmes (1) montiert sind.

4. Funkverbindungssystem nach Anspruch 1,
**dadurch gekennzeichnet,**
**dass** die Sende-Empfangseinrichtung am Helm (1) abnehmbar angebracht ist und
**dass** sie innerhalb des Helmes (1) zwischen dem Helm (1) und einer dämpfenden Schicht angeordnet ist.

5. Funkverbindungssystem nach Anspruch 1,
**dadurch gekennzeichnet,**
**dass** die Radiofunkverbindung im Zentimeterbereich der elektromagnetischen Wellen ausgebildet ist.

6. Funkverbindungssystem nach Anspruch 1,
**dadurch gekennzeichnet,**
**dass** die Sende-Empfangseinrichtung des Trainers als Funktelefon (2) ausgebildet ist.
